# EUROPEAN PATENT SPECIFICATION

(11) **EP 2 165 509 B1**
(45) Date of publication and mention of the grant of the patent: **24.10.2012**
(21) Application number: 07859073.4
(22) Date of filing: 17.12.2007
(51) Int. Cl.: H04L 29/08, H04W 8/18, G06F 17/30, G11B 27/10, G06Q 30/02, G06Q 30/06

(54) **SUBSCRIBER PREFERRED MEDIA SYSTEM AND METHOD**
TEILNEHMERVORZUGS-MEDIENSYSTEM UND VERFAHREN
SYSTÈME ET PROCÉDÉ DE MÉDIAS PRÉFÉRÉS D'UN ABONNÉ

(30) Priority: 09.07.2007 US 774624
(43) Date of publication of application: 24.03.2010
(73) Proprietor: Sony Ericsson Mobile Communications AB, 221 88 Lund (SE)
(72) Inventor: SCHREWELIUS, Claes, S-227 38 Lund (SE)
(74) Representative: HOFFMANN EITLE
(86) International application number: PCT/IB2007/003948
(87) International publication number: WO 2009/007779

(56) References cited:
- WO-A-2006/104433
- WO-A-2007/013860
- US-B1- 6 611 678

## Description

### TECHNICAL FIELD OF THE INVENTION

The technology of the present disclosure relates generally to subscription services for media such as music or video, and more particularly to a system and method for providing subscriber preferred media.

### DESCRIPTION OF THE RELATED ART

Portable electronic devices increasingly are being used for accessing media content, such as music, videos, and news and information. In addition to dedicated portable media players, other portable electronic devices, such as mobile telephones, personal digital assistants ("PDAs"), and the like often include media player functionality. Laptop and other portable computer systems likewise increasingly are being used for media player functions.

Not all users of such devices are equally savvy. For some users, the media experience with portable electronic devices may be limited by a lack of know-how, skill, or time.

Typically, a user acquires media content from a service provider over the Internet or some other communications network. The service provider may offer catalogs of content from which a user may select items. For example, if a user desires music, the user may search a music catalog by song title, CD, or artist to find the desired content. Alternatively, a user may browse the catalog by genre categories or other search criteria. Once a desirable song is found, the user may download the song to a portable electronic device, after which the song may be played and enjoyed. In some instances, the user may pay a fixed price per song download, or a user may pay a subscription fee, such as a monthly fee, for unlimited access to the service, or other payment schemes may be employed.

Similar systems may permit a user to acquire video content, such as movies, televisions shows, and the like. In addition, many news and information organizations now offer content subscriptions, which may offer downloadable content, as well as streaming video of live or recorded broadcasts.

These typical services require that the user select the specific content to be acquired. Though the need to select each item may be preferred by some, such a system may not be appropriate for a more casual user. For a casual or less sophisticated user, the need to select each media item individually may be overly time consuming, inconvenient, and even frustrating for one who is not particularly savvy with electronic devices and networks. The enjoyment of media content is therefore limited for such users.

From WO 2007/013860 a system comprising a media player is known, that is configured to receive a plurality of media sample portions. A timer calculates for each media sample portion a sample time corresponding to the time that the user plays each media sample portion.

From WO 2006/104433 A a content provider providing media content is known, wherein a list of targeted users is compiled. A central operator collects subscriber attributes. The content is modified according to the collected attributes, and the content is distributed to the subscribers in the best possible way.

From US 6,611,678 B1 a trainable radio scanner is known that determines upon the next station change, whether a predetermined time period has elapsed. If yes, the audio sample is written into a preferred audio data base and corresponding audio characteristics are stored with a preferred status flag.

### SUMMARY

To improve the consumer experience with portable electronic devices, there is a need in the art for an improved service for supplying media content to a portable electronic device. More particularly, there is a need in the art for a content service that obviates the need to select each media item individually, while still accommodating user preferences and tastes.

The present invention is defined in the appended claims 1 and 5, respectively. Embodiments of the present invention are given in the dependent claims.

Embodiments of the present invention include a system and method for providing subscriber preferred media. To create a subscription for a category of media content, such as a music subscription, a user may receive in an electronic device media sample portions (such as song portions) representative of different genres. The user may play or listen to the media sample portions for a sample time not to exceed the time of the respective media sample portion. For each media sample portion for which the sample time exceeds a benchmark time, the system may set a user preference for the genre of such media sample portion. As part of a subscription, the user then may receive media file offerings (such as song offerings) within the same genre as that of the corresponding preferred media sample portion. A comprehensive subscription service may include subscriptions for a variety of media categories, such as music, movies or other video, news and information, etc.

Accordingly, one aspect of the invention is a system for establishing user preferences for a user of an electronic device in conjunction with a media subscription server comprising a media player within the electronic device configured to receive a plurality of media sample portions, a timer for calculating for each media sample portion a sample time corresponding to the time that the user plays each media sample portion, and a controller configured to calculate whether each sample time exceeds a benchmark time, wherein the controller sets a user preference for the genre of each media sample portion for which the sample time exceeds the benchmark time.

In one embodiment of the system, the timer is within the electronic device.

In one embodiment of the system, the timer is within the media subscription server.

In one embodiment of the system, the controller is within the electronic device.

In one embodiment of the system, the controller is within the media subscription server.

In one embodiment of the system, the media subscription server provides the user with media file offerings within the genres of the user preferences.

In one embodiment of the system, the media file offerings are audio files.

In one embodiment of the system, the audio files are streaming audio files.

In one embodiment of the system, the media file offerings are video files.

In one embodiment of the system, the video files are streaming video files.

In one embodiment of the system, the electronic device is a mobile telephone.

In one embodiment of the system, the electronic device includes an input device, and wherein the controller is further configured to receive an input from the input device indicating whether a media sample portion is a preferred sample, and further wherein the controller is configured to set a user preference for the genre of each media sample portion indicated as preferred with the input device.

In one embodiment of the system, the media sample portions are from a plurality of genres.

In another aspect of the invention, a method of establishing a subscription of subscriber preferred media for a user of an electronic device comprises the steps of receiving a plurality of media sample portions in the electronic device, playing each media sample portion for a sample time, comparing each sample time to a benchmark time, and setting a user preference for the genre of each media sample portion for which the sample time exceeds the benchmark time.

In one embodiment of the method of establishing a subscription of subscriber preferred media, the method further comprises, for each media sample portion for which the sample time equals the benchmark time, receiving a prompt as to the whether the sample is preferred, inputting an affirmative or negative response to the prompt as to whether the sample is preferred, and setting a user preference for the genre of each media sample portion for which an affirmative response is inputted.

In one embodiment of the method of establishing a subscription of subscriber preferred media, the benchmark time is a benchmark range, and the sample time equals the benchmark time if the sample time is within the benchmark range.

In one embodiment of the method of establishing a subscription of subscriber preferred media, the method further comprises receiving media file offerings within the genres of the user preferences.

In one embodiment of the method of establishing a subscription of subscriber preferred media, the media file offerings are downloadable media files.

In one embodiment of the method of establishing a subscription of subscriber preferred media, the media file offerings are streaming media files.

Another aspect of the invention is a comprehensive subscription service of subscriber preferred media comprising a plurality of subscriptions established according to the method of establishing a subscription of subscriber preferred media.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the claims appended hereto.

Features that are described and/or illustrated with respect to one embodiment may be used in the same way or in a similar way in one or more other embodiments and/or in combination with or instead of the features of the other embodiments.

It should be emphasized that the terms "comprises" and "comprising," when used in this specification, are taken to specify the presence of stated features, integers, steps or components but do not preclude the presence or addition of one or more other features, integers, steps, components or groups thereof.

### BRIEF DESCRIPTION OF THE DRAWINGS

FIG. 1 is a schematic view of the front surface of a clamshell mobile telephone in the open position as an exemplary electronic device for use in accordance with an embodiment of the present invention.
FIG. 2 is a schematic block diagram of operative portions of the mobile telephone of FIG. 1.
FIG. 3A is a schematic diagram of a communications system in which the mobile telephone of FIG. 1 may operate.
FIG. 3B is a schematic block diagram of operative portions of a media subscription server shown in FIG. 3A.
FIG. 4 is a flow-chart depicting an embodiment of an exemplary method by which the present invention may be practiced.
FIG. 5 is a flow-chart depicting an embodiment of an alternative exemplary method by which the present invention may be practiced.

### DETAILED DESCRIPTION OF EMBODIMENTS

Embodiments of the present invention will now be described with reference to the drawings, wherein like reference numerals are used to refer to like elements throughout. It will be understood that the figures are not necessarily to scale.

The following description is made in the context of a mobile telephone. It will be appreciated that the invention is not intended to be limited to the context of a mobile telephone and may relate to any type of appropriate electronic equipment, examples of which include a media player, a gaming device, or a computer. For purposes of the description herein, the interchangeable terms "electronic equipment" and "electronic device" also may include portable radio communication equipment. The term "portable radio communication equipment," which sometimes hereinafter is referred to as a "mobile radio terminal," includes all equipment such as mobile telephones, pagers, communicators, electronic organizers, personal digital assistants (PDAs), laptop and other portable computers, smartphones, and any portable communication apparatus or the like.

The system of providing subscriber preferred media may be summarized as follows. When starting the mobile telephone for the first time, a user may be prompted as to whether to use and set up a media subscription application. The user may first receive a brief description of the application. The user may be asked to listen to a number of media intros, such as music or song intros. Such intros will be referred to herein broadly as media sample portions. As an example, for a music subscription, those intros may include music from different periods, representing different genres, beats per minute, mood, etc. The length of time that a user listens to the music intros is indicative of how much the user desires this type of music. For example, if a user chooses to skip a couple of "dansband-musik" and "country western" intros after less than one second, this will set a user's personal preference settings to "no" for these genres of music. On the other hand, if the user chooses to listen to the entire punk rock theme intro and the "Handel's Messiah" intro for thirty seconds, this listening time is indicative that the user highly desires these genres of music. The user's personal preference settings will be set to "yes" for these genres of music. If, say, the user listens to Swedish dance chart music for seven seconds, this may be indicative that the user desires this kind of music, but only marginally. After the user samples of a number of intros from various genres, the user may be asked whether to accept a subscription of music from the genres whose preferences were designated "yes", wherein the subscription may include various download or streaming music offerings from within the user's preferred music genres. The user may also be able to set a personal "mood" for a given time period so that the subscription responds by offering music most desired at that time from within the preferred genres.

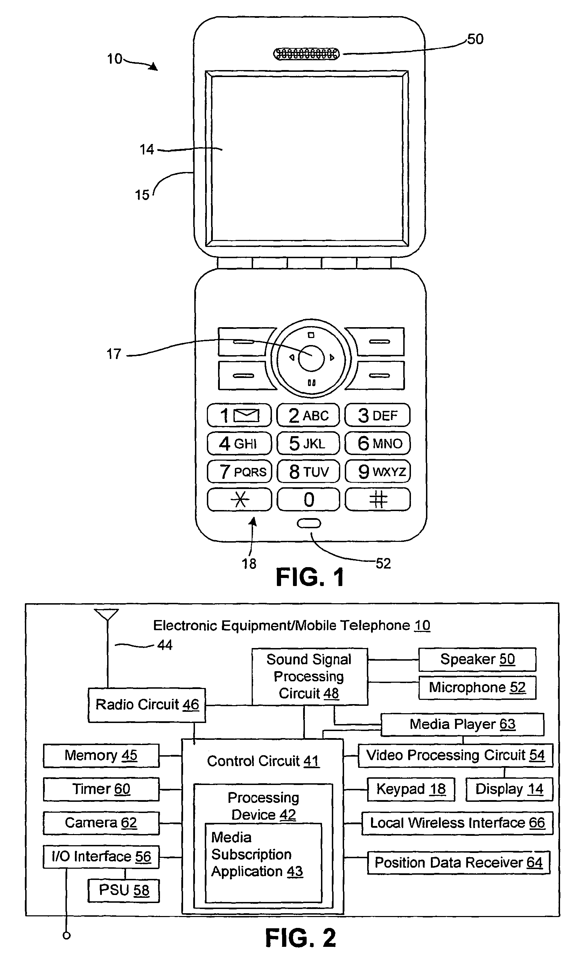

Referring initially to FIG. 1, mobile telephone 10 may be a clamshell phone with a flip-open cover 15 movable between an open and a closed position. It will be appreciated that the mobile telephone 10 may have other configurations, such as, for example, a "brick" or "block" configuration. In FIG. 1, the cover is shown in the open position.

FIG. 2 represents a functional block diagram of the mobile telephone 10. The mobile telephone 10 includes a media subscription application program 43 for carrying out the features of the invention. Application 43 may be embodied as executable code that is resident in and executed by the mobile telephone 10. The mobile telephone 10 may include a controller or processor that executes the program stored on a computer or machine-readable medium. The program may be a stand-alone software application or form a part of a software application that carries out additional tasks related to the mobile telephone 10.

The mobile telephone 10 also may include a media player 63. The media player 63 may be used to present audiovisual content to the user which may include images and/or sound together or individually, such as photographs or other still images, music, voice or other sound recordings, movies or other videos, mobile television content, news and information feeds, streaming audio and video, and the like.

The video portion of the output the media player may be displayed on a display 14. The display 14 also may display other information to a user regarding telephone function such as operating state, time, telephone numbers, contact information, various navigational menus, etc., which enable the user to utilize the various features of the mobile telephone 10. Also, the display 14 may be used as an electronic viewfinder for a camera assembly 42. The audio portion of the output of the media player may be played through a speaker 50.

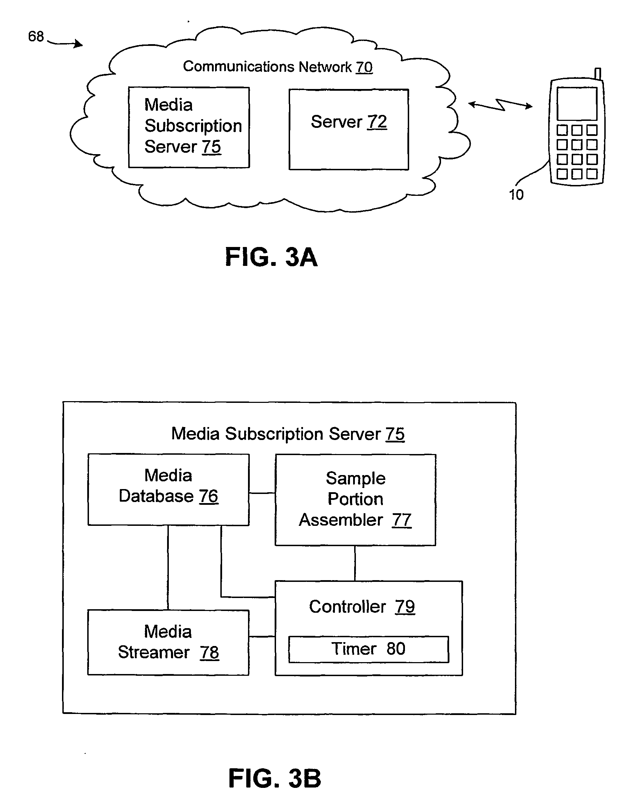

Referring to FIG. 3A, the mobile telephone 10 may be configured to operate as part of a communications system 68. The system 68 may include a communications network 70 having a server 72 (or servers) for managing calls placed by and destined to the mobile telephone 10, transmitting data to the mobile telephone 10 and carrying out any other support functions. The network 70 may support the communications activity of multiple mobile telephones 10 and other types of end user devices. As will be appreciated, the server 72 may be configured as a typical computer system used to carry out server functions and may include a processor configured to execute software containing logical instructions that embody the functions of the server 72 and a memory to store such software. In accordance with an embodiment of the present invention, a user may acquire media content via network 70, as is further described below.

Network 70 may include a media subscription server 75 dedicated to providing subscription services as described herein. FIG. 3B represents a functional block diagram of the media subscription server 75. Server 75 may include a media database 76 for storing a variety of media files, such as downloadable music, movies, video, etc. Server 75 also may include a sample portion assembler 77 for assembling media sample portions of media files, which then may be sampled by a user. Server 75 also may include a media streamer 78 for streaming media files, which may include live broadcasts. Server 75 also may include a controller 79 that acts as a benchmark time analyzer. As is further described below, the controller 79 may compare the time for which a user plays a media sample portion (the sample time) to a benchmark time to determine if the user prefers that media genre.

An exemplary method of using a mobile telephone 10 having media subscription application 43 to acquire subscriber preferred media content is described below. Although the exemplary method is described as a specific order of executing functional logic steps, the order of executing the steps may be changed relative to the order described. Also, two or more steps described in succession may be executed concurrently or with partial concurrence. It is understood that all such variations are within the scope of the present invention.

A user may select application 43 from a conventional menu displayed on display 14 of the mobile telephone 10. Alternatively, the user may select application 43 with a button on a keypad 18 dedicated for that purpose. When executed, application 43 may access the network 70 and the media subscription server 75 operated by a content provider.

When activated for the first time, application 43 may prompt a user to set up one or more subscription services. For example, the user may wish to set up a subscription music service, movie service, television service, news or information service, or other. As an example, it is assumed that the user selects a music service, which may be created as follows.

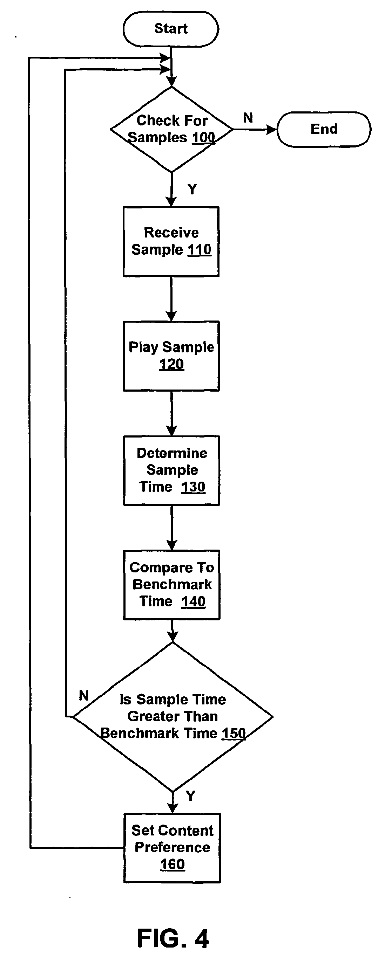

An exemplary method for use with the present invention is depicted in FIG. 4. At step 100, application 43 may check to see if sample portions of media files, songs in this example, are available from the content provider. The content in the form of media files (song files) may be stored in a media database of 76 of the media subscription server 75. As the music service is being created for the first time, media sample song portions likely would be available. Sample portion assembler 77 of the media subscription server may assemble media sample portions, such as song sample portions. Media player 63 is configured to receive media sample portions (song samples), and at step 110 the media player may receive a song sample. At step 120, the media player 63 may play the song sample for the user.

At step 130, a timer 60 within mobile telephone 10 may calculate the length of time that the user listens to the sample, referred to herein as the sample time. Alternatively, a timer 80 may be included within the controller 79 of the media subscription server 75 to calculate the sample time. At step 140, the sample time may then be compared to a benchmark time. As with the timing function, the comparison may be performed within the mobile telephone 10 by the control circuit 41 and/or processing device 42. Alternatively, the comparison may be performed on the network by the controller 79 of the media subscription server 75. The benchmark time is a time intended to be indicative of whether a user is enjoying the sample. Presumably, if the sample is disliked, the user would end the listening session in a short period of time, while if the sample is enjoyable, the user would listen longer.

For example, suppose the benchmark time is set to seven seconds. If a song sample is enjoyable, the user may listen to the song sample for more than seven seconds indicating that the song sample is preferred. In one embodiment, the user may not be aware of the benchmark time. The subscription service thus may run transparent to the user. In an alternative embodiment, the user may receive instructions that explain the benchmark and sample times so that the user knows to listen to a desirable song sample longer. If the user does not enjoy the sample, then the user stops playing the sample, indicating that the song sample is not preferred.

Referring again to FIG. 4, if at step 150 the user has not listened to the song sample for more than seven seconds (the benchmark time), then the sample is deemed non-preferred. The method may then return to the beginning to check for more song samples. If at step 150 the sample time is determined to exceed the benchmark time, then the sample is deemed preferred. At step 160, the user's content preferences are set to include the genre of the preferred sample. The method may then return to the beginning to check for more song samples. As part of a music subscription, the user then may receive media file (song) offerings comparable in genre to that of the preferred sample. In each case of whether a sample is preferred or not, when the method returns to step 100, if no more samples are available or desired, the method ends.

In an exemplary embodiment, a user may listen to song samples from a variety of music genres. The invention acts substantially transparent to the user to build a subscription service in a "learning mode" wherein the service forms a portfolio of preferred samples representing a variety of genres. The user may be invited to participate and told simply to enjoy what sample they are listening to or move on to the next sample. For example, the user may be offered and listen in turn to song samples of rock, country, classical, new age, etc. With each song sample, the user's preferences may be set by the subscription service to designate the corresponding genre as preferred if the user has listened to the sample for a length of time (the sample time) longer than the benchmark time. In one embodiment, the user may be sent multiple song samples within each genre, and the listening sample times may be averaged or otherwise weighted to identify the subscriber's preferences.

In one embodiment, the length of the sample time may be classified into gradations of preference. For example, if the user listened to the rock sample for only eight seconds, then the user's preferences may be set to "mildly preferred" for the rock genre. If, on the other hand, the user listened to the classical song sample for thirty seconds, then the user's preferences may be set to "strongly preferred" for the classical genre. As part of the music subscription, the user may then receive fewer rock song offerings (the mildly preferred genre) than classical song offerings (the strongly preferred genre). Although this embodiment has been described with two preference gradations, additional preference gradations may be employed.

After the user has listened to a desired number or predetermined number of song samples, the user may create a subscription of preferred music. The subscription may take on a variety of forms. For example, a user may receive periodic offerings of downloads of music within the same genres as the genres of the corresponding preferred samples. For example, if a user listened to the rock song sample for a time period longer than the benchmark time, then the user may receive music offerings within the rock genre. If a user listened to the country song sample for a time period longer than the benchmark time, then the user may receive music offerings within the country genre, and so on. The download offerings may originate from the media database 76 of the media subscription server 75 on the network 70. A user may accept or reject particular download offerings, and pay for only those accepted. In one embodiment, the downloadable music offerings may include ringtones.

In one embodiment, the user may set a "mood" to identify a most preferred genre or genres for a given period of time. In such embodiment, the download offering may be focused upon the selected mood. For example, the user may select a "party" mood, and the service will offer downloads primarily from rock or dance-type preferred genres for the time period for which the party mood is set. Alternatively, for example, the user may select a "relaxed" mood, and the service will offer downloads primarily from classical or contemporary-type preferred genres for the time period for which the relaxed mood is set. Other mood options may be employed as well.

Alternatively, the media player may operate as a personal radio wherein each of the genres of the preferred samples is effectively a distinct station. For example, if a user listened to the rock, country, and classical song samples for a time period longer than the benchmark time, the subscription may include stations for rock, country, and classical music respectively. When the media player is accessed, audio content of a selected genre station may be streamed from the media streamer 78 of the media subscription server 75 on the network 70. The user may switch stations, and the streaming audio may alter commensurately. For a personal radio, the user may pay a subscription fee per a set time period (such as monthly or weekly) or per time of usage. Other subscription terms or parameters may be created without departing from the scope of the invention.

The subscription also may be edited and updated. For example, a user may periodically check for additional song samples as new music or genres of music are sought. The method of FIG. 4 thus may be repeated, wherein at step 100, application 43 may check for additional song samples not previously accessed by the user. If new song samples are being offered, then a user may listen one or more of the new samples. Following the remainder of the method of FIG. 4, new musical genres may be added to the subscription. The subscription service may consider previously established preferences, or reset the preference to permit the user (or a new user) to build the subscription service from scratch.

This embodiment of the invention has advantages over prior art music services in that a user need not engage in the often time consuming, potentially cumbersome task of selecting each individual song. Rather, after the initial setup, the user may be provided with music content offerings automatically within the genres of the corresponding preferred samples, either by automatic download offerings, or as streaming audio in a personal radio format.

Although a music service has been described as an exemplary embodiment, comparable subscription services may be established for other forms of media content. For example, an exemplary embodiment may include a movie subscription service. According to this embodiment, in FIG. 4 at step 100, application 43 would check for movie samples. At step 110, media player 63 may receive a movie sample from the media database 76, and the media player may play the movie sample at step 120. At step 130, a sample time may be determined as the time period for which the user watches the movie sample. At step 140, the sample time may be compared to a benchmark time. At step 150, a determination may be made as to whether the sample time exceeds the benchmark time. Again, the sample time may be measured and compared either by a timer and controller within the electronic device, or within the media subscription server 75 on the network 70. If the sample time does not exceed the benchmark time, then the method may return to check for additional movie samples. As with music, a user may sample movies within a variety of genres, such as drama, comedy, horror, action, etc. If at step 150 it is determined that the sample time exceeds the benchmark time, then the given movie sample is deemed preferred at step 160, and a user preference for the genre corresponding to the preferred sample is set. The various embodiments described above for setting music preferences may also be used in conjunction with setting movie preferences. The user may then receive movie content offerings within the same genre as that of the preferred samples. For example, the user may as part of a movie subscription be offered movie downloads or streaming movie video. Again, as with music, the user need not select individual movie files, but rather may be provided with movie content offerings automatically within the genres of the preferred samples. A comparable subscription service may be established for other forms of video program content, such as television programs and the like.

Another embodiment may include a news or information subscription service. According to this embodiment, in FIG. 4 at step 100, application 43 may check for news or information samples. At step 110, media player 63 may receive a news or information sample from the media subscription server 75, and the media player may play the sample at step 120. At step 130, a sample time may be determined as the time period for which the user watches the news or information sample. At step 140, the sample time may be compared to a benchmark time. At step 150, a determination may be made as to whether the sample time exceeds the benchmark time. Again, the sample time may be measured and compared either by a timer and controller within the electronic device, or within the media subscription server 75 on the network 70. If the sample time does not exceed the benchmark time, then the method may return to the beginning to check for additional news or information samples. As with music and movies, a user may sample news and information from a variety of genres, such as international, national, financial, sports, entertainment, etc. The various embodiments described above for setting music and movie preferences may also be used in conjunction with setting news and information preferences. If at step 150 it is determined that the sample time exceeds the benchmark time, then the given news or information sample is deemed preferred within the user preferences at step 160. The user may then receive news or information content within the same genre as that of the preferred sample. For example, the user may as part of the subscription be offered downloads of particular news stories from the media database 76, or streaming video of recorded new stories from the media streamer 78. The streaming video also may be live news feeds or broadcasts.

Again, as with music and movies, the user need not select individual files, but rather may be offered news and information content automatically within the genres of the preferred samples. In one alternative embodiment, the news subscription service may operate similarly to the personal radio described above. A user may create a personal information service that includes defined stations, wherein each station corresponds to a particular preferred genre of news or information. A user may select with the media player a particular station if, for example, a user wishes to access financial news, and then switch to other news or information stations as the user may desire.

It will be appreciated that subscription services for additional content categories may be established without departing from the scope of the invention. Furthermore, a comprehensive subscription service may include more than one subscription category. For example, a user may establish a comprehensive subscription service that includes separate subscriptions for music, movies, news, etc.

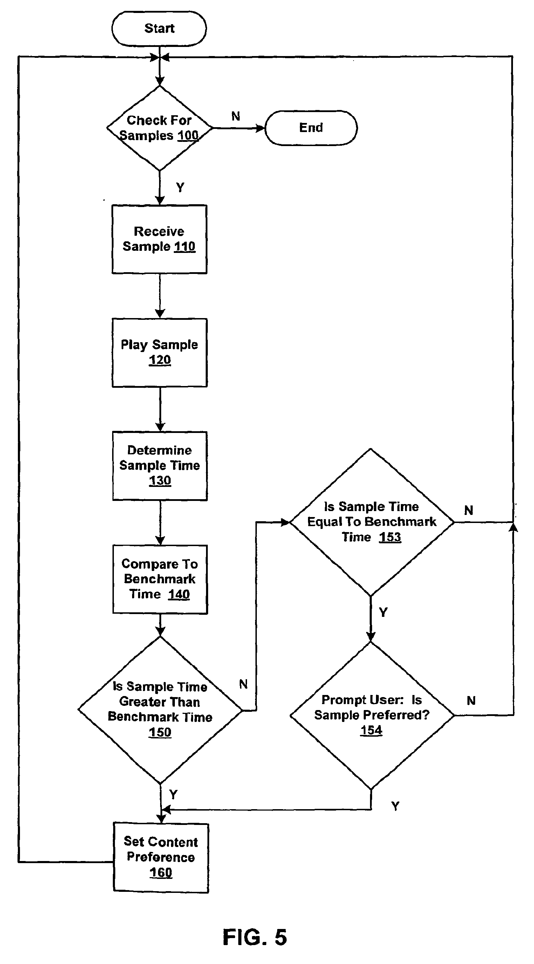

In some instances, a sample time equal to or close to the benchmark time may be inconclusive as to whether the sample should be deemed preferred. Accordingly, FIG. 5 depicts an alternative embodiment of the method in which inconclusive situations are addressed. As before, the method proceeds to step 150, at which time a determination may be made as to whether the sample time exceeds the benchmark time. If so, then the sample is deemed preferred, and the preference is registered at step 160. The method may then return to the beginning to check for more samples.

In the alternative embodiment of FIG. 5, if the sample time does not exceed the benchmark time, then in step 153 a determination may be made as to whether the sample time equals the benchmark time. If not, then the sample is deemed non-preferred, and the method may return to the beginning to check for additional samples.

If at step 153 it is determined that the sample time equals the benchmark time, then the sample is deemed inconclusively preferred. At step 154, the user may receive a prompt from the service for an input to indicate whether the sample should be deemed preferred. In one embodiment, the user may employ keypad 18 to respond to the prompt. If the user inputs an affirmative response, then the method proceeds to step 160, wherein the designated user preference is registered. The method may then return to the beginning step 100 to check for more samples. As part of the subscription, the user may then receive one or more media files comparable in genre to that of the preferred sample. If the user responds with a negative input at step 154, then the method may return immediately to the beginning step 100 to check for additional samples.

In an alternative embodiment, the benchmark time may be a benchmark range. For example, instead of the benchmark time being seven seconds, the benchmark may be a range of 6-8 seconds. In this example, if the sample time exceeds eight seconds, then the sample is deemed preferred at step 160, and as part of the subscription the user may receive media items of the genre comparable to that of the preferred sample. If the sample time is less than six seconds, then the sample is deemed non-preferred and no preference is registered. If the sample time is from six to eight seconds, then the sample is within the benchmark range and deemed inconclusive. As in the previous embodiment, the user may then receive a prompt for an input to indicate whether the sample should be deemed preferred. If the user inputs an affirmative response, then the user preference is registered at step 160. As part of the subscription, the user then may receive one or more media files comparable in genre to that of the preferred sample. If the user responds with a negative input, then no preference is registered.

It will be appreciated that the benchmark time or range may be varied without departing from the scope of the invention. In addition, different media categories may have different benchmark times or ranges. For example, there may be a different benchmark time or range for each of the categories of music, movies, news feeds, etc., respectively.

Referring again to FIG. 2, additional features of the mobile telephone 10 will now be described. For the sake of brevity, generally conventional features will not be described in great detail herein. In addition to its use with the present invention, keypad 18 may provide for a variety of user input operations. For example, keypad 18 typically includes alphanumeric keys for allowing entry of alphanumeric information such as telephone numbers, phone lists, contact information, notes, etc. In addition, keypad 18 typically includes special function keys such as a "call send" key for initiating or answering a call, and a "call end" key for ending or "hanging up" a call. Special function keys also may include menu navigation and select keys to facilitate navigating through a menu displayed on the display 14. Some or all of the keys may be used in conjunction with the display as soft keys. Keys or key-like functionality also may be embodied as a touch screen associated with the display 14. When camera assembly 62 is employed, keys from the keypad 18 may be used to control operation of the camera. For instance, one of the keys may serve as a shutter button 17.

The mobile telephone 10 includes call circuitry that enables the mobile telephone 10 to establish a call and/or exchange signals with a called/calling device, typically another mobile telephone or landline telephone, or another electronic device. The mobile telephone 10 also may be configured to transmit, receive, and/or process data such as text messages (e.g., colloquially referred to by some as "an SMS," which stands for simple message service), electronic mail messages, multimedia messages (e.g., colloquially referred to by some as "an MMS," which stands for multimedia message service), image files, video files, audio files, ring tones, streaming audio, streaming video, data feeds (including podcasts) and so forth. Processing such data may include storing the data in the memory 45, executing applications to allow user interaction with data, displaying video and/or image content associated with the data, outputting audio sounds associated with the data and so forth.

The mobile telephone 10 may include a primary control circuit 41 that is configured to carry out overall control of the functions and operations of the mobile telephone 10. The control circuit 41 may include a processing device 42, such as a CPU, microcontroller or microprocessor. Among their functions, to implement the features of the present invention, the control circuit 41 and/or processing device 42 comprise a controller that may execute program code embodied as the media subscription application 43. It will be apparent to a person having ordinary skill in the art of computer programming, and specifically in application programming for cameras, mobile telephones or other electronic devices, how to program a mobile telephone to operate and carry out logical functions associated with application 43. Accordingly, details as to specific programming code have been left out for the sake of brevity. Also, while the code may be executed by control circuit 41 in accordance with an exemplary embodiment, such controller functionality could also be carried out via dedicated hardware, firmware, software, or combinations thereof, without departing from the scope of the invention.

The mobile telephone 10 may include an antenna 44 coupled to a radio circuit 46. The radio circuit 46 includes a radio frequency transmitter and receiver for transmitting and receiving signals via the antenna 44 as is conventional. The mobile telephone 10 further includes a sound signal processing circuit 48 for processing audio signals transmitted by and received from the radio circuit 46, or received from the media player 63. Coupled to the sound processing circuit 48 are a speaker 50 and microphone 52 that enable a user to listen and speak via the mobile telephone 10 as is conventional.

The display 14 may be coupled to the control circuit 41 by a video processing circuit 54 that converts video data to a video signal used to drive the display. The video processing circuit 54 may include any appropriate buffers, decoders, video data processors and so forth. The video data may be generated by the control circuit 41, retrieved from a video file that is stored in the memory 45, derived from an incoming video data stream received by the radio circuit 48, played by the media player 63, or obtained by any other suitable method.

The mobile telephone 10 also may include a position data receiver 64, such as a global positioning system (OPS) receiver, Galileo satellite system receiver or the like. The mobile telephone 10 also may include a local wireless interface 66, such as an infrared transceiver and/or an RF adaptor (e.g., a Bluetooth adapter), for establishing communication with an accessory, another mobile radio terminal, a computer or another device. For example, the local wireless interface 66 may operatively couple the mobile telephone 10 to a headset assembly (e.g., a PHF device) in an embodiment where the headset assembly has a corresponding wireless interface.

The mobile telephone 10 also may include an I/O interface 56 that permits connection to a variety of I/O conventional I/O devices. One such device is a power charger that can be used to charge an internal power supply unit (PSU) 58.

Although the invention has been shown and described with respect to certain preferred embodiments, it is understood that equivalents and modifications will occur to others skilled in the art upon the reading and understanding of the specification. The present invention includes all such equivalents and modifications, and is limited only by the scope of the following claims.

## Claims

1. A system (10, 75) for establishing user preferences for a user of an electronic device (10) in conjunction with a media subscription server (75) comprising:
a media player (63) within the electronic device configured to receive a plurality of media sample portions;
a timer (60, 80) for calculating for each media sample portion a sample time corresponding to the time that the user plays each media sample portion;
**characterized by**
a controller (41, 79) configured to calculate whether each sample time exceeds a benchmark time, wherein the controller sets a user preference for the genre of each media sample portion for which the sample time exceeds the benchmark time
wherein the media subscription server (75) is adapted to provide the user with media file offerings within the genres of the user preferences.

2. The system (10, 75) according to claim 1, wherein the timer (60) and controller (41) are within the electronic device (10).

3. The system (10, 75) according to claim 1, wherein the timer (80) and controller (79) are within the media subscription server (75).

4. The system (10, 75) according to any of claims 1-3, wherein the electronic device (10) includes an input device (18), and wherein the controller (41, 79) is further configured to receive an input from the input device indicating whether a media sample portion is a preferred sample, and further wherein the controller is configured to set a user preference for the genre of each media sample portion indicated as preferred with the input device.

5. A method of establishing user preferences for a user of an electronic device (10) comprising the steps of:
receiving a plurality of media sample portions in the electronic device;
playing each media sample portion for a sample time;
**characterized by**
comparing each sample time to a benchmark time;
setting a user preference for the genre of each media sample portion for which the sample time exceeds the benchmark time, and
receiving media file offerings within the genres of the user preferences from a media subscription server.

6. The method of establishing a subscription of subscriber preferred media according to claim 5 further comprising:
for each media sample portion for which the sample time equals the benchmark time, receiving a prompt as to the whether the sample is preferred;
inputting an affirmative or negative response to the prompt as to whether the sample is preferred; and
setting a user preference for the genre of each media sample portion for which an affirmative response is inputted.

7. The method of establishing a subscription of subscriber preferred media according to any of claims 5 or 6, wherein the benchmark time is a benchmark range, and the sample time equals the benchmark time if the sample time is within the benchmark range.

8. The method of establishing a subscription of subscriber preferred media according to claim 5, further comprising:
for each media sample portion, setting a gradation of preference depending upon the length of the sample time; and
receiving more media file offerings for higher preference genres than lower preference genres.

9. A comprehensive subscription service of subscriber preferred media comprising a plurality of user preferences established according to the method of any of claims 5-8.

## Patentansprüche

1. System (10, 75) zum Ermitteln von Benutzerpräferenzen für einen Benutzer einer elektronischen Vorrichtung (10) in Verbindung mit einem Medienabonnementserver (75), umfassend:
einen Medienabspieler (63) innerhalb der elektronischen Vorrichtung, der konfiguriert ist, eine Vielzahl von Medienprobeabschnitten zu empfangen;
einen Zeitgeber (60, 80) zum Berechnen, für jeden Medienprobeabschnitt, einer Probezeit, die der Zeit entspricht, die der Benutzer jeden Medienprobeabschnitt abspielt;
**gekennzeichnet durch**
eine Steuerung (41, 79), die konfiguriert ist, zu berechnen, ob jede Probezeit eine Bewertungszeit überschreitet, wobei die Steuerung eine Benutzerpräferenz für das Genre jedes Medienprobeabschnitts einstellt, für welches die Probezeit die Bewertungszeit überschreitet
wobei der Medienabonnementserver (75) angepasst ist, dem Benutzer Mediendateiangebote innerhalb der Genres der Benutzerpräferenzen bereitzustellen.

2. System (10, 75) nach Anspruch 1, wobei sich der Zeitgeber (60) und die Steuerung (41) innerhalb der elektronischen Vorrichtung (10) befinden.

3. System (10, 75) nach Anspruch 1, wobei sich der Zeitgeber (80) und die Steuerung (79) innerhalb des Medienabonnementservers (75) befinden.

4. System (10, 75) nach einem der Ansprüche 1 bis 3, wobei die elektronische Vorrichtung (10) eine Eingabevorrichtung (18) umfasst und wobei die Steuerung (41, 79) ferner konfiguriert ist, eine Eingabe von der Eingabevorrichtung zu empfangen, die anzeigt, ob ein Medienprobeabschnitt eine bevorzugte Probe ist, und ferner wobei die Steuerung konfiguriert ist, eine Benutzerpräferenz für das Genre jedes Medienprobeabschnitts einzustellen, der als bevorzugt mit der Eingabevorrichtung angezeigt wird.

5. Verfahren zum Ermitteln von Benutzerpräferenzen für einen Benutzer einer elektronischen Vorrichtung (10), umfassend die Schritte:
Empfangen einer Vielzahl von Medienprobeabschnitten in der elektronischen Vorrichtung;
Abspielen jedes Medienprobeabschnitts für eine Probezeit;
**gekennzeichnet durch**
Vergleichen jeder Probezeit mit einer Bewertungszeit;
Einstellen einer Benutzerpräferenz für das Genre für jeden Medienprobeabschnitt, für welchen die Probezeit die Bewertungszeit überschreitet, und
Empfangen von Mediendateiangeboten innerhalb der Genres der Benutzerpräferenzen von einem Medienabonnementserver.

6. Verfahren zum Ermitteln eines Abonnements von von einem Abonnementen bevorzugten Medien nach Anspruch 5, ferner umfassend:
für jeden Medienprobeabschnitt, für welchen die Probezeit gleich der Bewertungszeit ist, Empfangen einer Eingabeaufforderung, ob die Probe bevorzugt ist;
Eingeben einer positiven oder negativen Antwort auf die Eingabeaufforderung, ob die Probe bevorzugt ist; und
Einstellen einer Benutzerpräferenz für das Genre jedes Medienprobeabschnitts, für welchen eine positive Antwort eingegeben wird.

7. Verfahren zum Ermitteln eines Abonnements von von einem Abonnenten bevorzugten Medien nach einem der Ansprüche 5 oder 6,
wobei die Bewertungszeit eine Bewertungsspanne ist und die Probezeit gleich der Bewertungszeit ist, falls die Probezeit innerhalb der Bewertungsspanne ist.

8. Verfahren zum Ermitteln eines Abonnements von von einem Abonnenten bevorzugten Medien nach Anspruch 5, ferner umfassend:
für jeden Medienprobeabschnitt, Einstellen einer Präferenzabstufung abhängig von der Länge der Probezeit; und
Empfangen von mehr Mediendateiangeboten für Genres mit höherer Präferenz als für Genres mit niedrigerer Präferenz.

9. Gesamtabonnementservice von von einem Abonnenten bevorzugten Medien, umfassend eine Vielzahl von Benutzerpräferenzen, ermittelt gemäß dem Verfahren nach einem der Ansprüche 5 bis 8.

## Revendications

1. Système (10, 75) pour établir des préférences d'utilisateur pour un utilisateur d'un dispositif électronique (10) en relation avec un serveur d'abonnement de médias (75) comprenant :
un lecteur de médias (63) dans le dispositif électronique configuré pour recevoir une pluralité de morceaux d'échantillon de média ;
une minuterie (60, 80) pour calculer pour chaque morceau d'échantillon de média un temps d'échantillonnage correspondant à l'instant où l'utilisateur joue chaque morceau d'échantillon de média ;
**caractérisé par**
une unité de commande (41, 79) configurée pour calculer si chaque temps d'échantillonnage dépasse un temps d'évaluation de contenu, dans lequel l'unité de commande paramètre une préférence d'utilisateur pour le genre de chaque morceau d'échantillon de média pour lequel le temps d'échantillonnage dépasse le temps d'évaluation de contenu ;
dans lequel le serveur d'abonnement de médias (75) est conçu pour fournir à l'utilisateur des offres de fichiers de médias correspondant aux genres des préférences d'utilisateur.

2. Système (10, 75) selon la revendication 1, dans lequel la minuterie (60) et l'unité de commande (41) sont à l'intérieur du dispositif électronique (10).

3. Système (10, 75) selon la revendication 1, dans lequel la minuterie (80) et l'unité de commande (79) sont à l'intérieur du serveur d'abonnement de médias (75).

4. Système (10, 75) selon l'une quelconque des revendications 1 à 3, dans lequel le dispositif électronique (10) inclut un dispositif d'entrée (18), et dans lequel l'unité de commande (41, 79) est en outre configurée pour recevoir une entrée en provenance du dispositif d'entrée indiquant si un morceau d'échantillon de média est un échantillon préféré, et dans lequel en outre l'unité de commande est configurée pour paramétrer une préférence d'utilisateur pour le genre de chaque morceau d'échantillon de média indiqué comme étant préféré avec le dispositif d'entrée.

5. Procédé d'établissement de préférences d'utilisateur pour un utilisateur d'un dispositif électronique (10) comprenant les étapes de :
réception d'une pluralité de morceaux d'échantillon de média dans le dispositif électronique ;
lecture de chaque morceau d'échantillon de média pendant un temps d'échantillonnage ;
**caractérisé par**
la comparaison de chaque temps d'échantillonnage à un temps d'évaluation de contenu ;
le paramétrage d'une préférence d'utilisateur pour le genre de chaque morceau d'échantillon de média pour lequel le temps d'échantillonnage dépasse le temps d'évaluation de contenu, et
la réception d'offres de fichiers de médias correspondant aux genres des préférences d'utilisateur à partir d'un serveur d'abonnement de médias.

6. Procédé d'établissement d'un abonnement de médias préférés d'abonné selon la revendication 5, comprenant en outre :
pour chaque morceau d'échantillon de média pour lequel le temps d'échantillonnage est égal au temps d'évaluation de contenu, la réception d'une invitation quant à savoir si l'échantillon est préféré ;
l'entrée d'une réponse affirmative ou négative à l'invitation quant à savoir si l'échantillon est préféré ; et
le paramétrage d'une préférence d'utilisateur pour le genre.de chaque morceau d'échantillon de média pour lequel une réponse affirmative est entrée.

7. Procédé d'établissement d'un abonnement de médias préférés d'abonné selon l'une quelconque des revendications 5 ou 6, dans lequel le temps d'évaluation de contenu est une plage d'évaluation de contenu, et le temps d'échantillonnage est égal au temps d'évaluation de contenu si le temps d'échantillonnage est dans la plage d'évaluation de contenu.

8. Procédé d'établissement d'un abonnement de médias préférés d'abonné selon la revendication 5, comprenant en outre :
pour chaque morceau d'échantillon de média, le paramétrage d'une gradation de préférence selon la longueur du temps d'échantillonnage ; et
la réception de plus d'offres de fichiers de médias pour des genres à préférence plus élevée que des genres à préférence moins élevée.

9. Service d'abonnement complet de médias préférés d'abonné comprenant une pluralité de préférences d'utilisateur établies selon le procédé de l'une quelconque des revendications 5 à 8.
